# EUROPÄISCHE PATENTANMELDUNG

(11) **EP 0 793 322 A2**
(43) Veröffentlichungstag der Anmeldung: **03.09.1997**
(21) Anmeldenummer: 97102941.8
(22) Anmeldetag: 22.02.1997
(51) Int. Cl.: H02G 3/08

(54) **Abdichtung**

(30) Priorität: 02.03.1996 DE 19608118
(71) Anmelder: ABB PATENT GmbH, 68309 Mannheim (DE)
(72) Erfinder: Briske, Heinz, 58507 Lüdenscheid (DE); Knorr, Michael, 58874 Werdohl (DE); Claus, Frank M., 58511 Lüdenscheid (DE)
(74) Vertreter: Rupprecht, Klaus, Dipl.-Ing.

(57) **Zusammenfassung**

Die Erfindung betrifft eine Abdichtung für eine Leitungsdurchführung in einem eine Teilungsebene aufweisenden geteilten Gehäuse, zum Beispiel mit einem Gehäuseunterteil und mit einem Gehäuseoberteil, mit einer in der Teilungsebene des Gehäuses angeordneten Ausnehmung, welche ein eingefügtes ringförmige Dichtelement aufweist, durch welches eine Leitung durchgeführt ist, die von dem ringförmigen Dichtelement konzentrisch umfaßt ist, welches Dichtelement von den miteinander Gehäuseteilen elastisch verformt ist und sich abdichtend an die Leitung anlegt, wobei an der Ausnehmung an dem Gehäuse eine stutzenähnliche Anformung vorgesehen ist, auf welche eine Schraubkappe aufschraubbar ist und die von jeweils einstückig angeformten Halbzylindern mit Außengewinde gebildet ist, die miteinander gemeinsam einen Hohlzylinder bilden, daß die ringförmige Abdichtung längsgeteilt ist und daß die beiden Teile der Abdichtung gemeinsam die Leitung umschließen und von der auf die stutzenähnliche Anformung aufgeschraubten Schraubkappe zusammengepreßt sich abdichtend gegen die Leitung anlegen.

## Beschreibung

Die Erfindung betrifft eine Abdichtung für eine Leitungsdurchführung in einem eine Teilungsebene aufweisenden geteilten Gehäuse, zum Beispiel mit einem Gehäuseunterteil und mit einem Gehäuseoberteil, mit einer in der Teilungsebene des Gehäuses angeordneten Ausnehmung, welche ein eingefügtes ringförmiges Dichtelement aufnimmt für eine durchgeführte Leitung, die von dem ringförmigen Dichtelement konzentrisch umfaßt ist, welches Dichtelement von den aneinanderliegenden Gehäuseteilen elastisch verformt ist und sich abdichtend an die Leitung anlegt.

Es ist allgemein bekannt, beim Einsatz in Feuchträumen oder bei Beaufschlagung mit Spritzwasser Leitungsdurchführungen an Gehäusewandungen, zum Beispiel an elektrischen Geräten, für einzelne elektrische Leitungen mit sogenannten PG-Verschraubungen wasserdicht abzudichten. Als PG-Verschraubung oder Panzergewinde-Verschraubung werden ortsfest anzuordnende zweiteilige Klemmverschraubungen bezeichnet, bei welchen ein zwischengefügter Dichtring aus elastischem Material, zum Beispiel Gummi, infolge des axialen Zusammengehens der auf den Stutzen aufgeschraubten Schraubkappe axial und auch radial zusammengedrückt wird. Hierbei wird die Dichtung vor der Montage über die betreffende Leitung geschoben und dann in die vorgesehene Durchführung eingesetzt.

Bei geteilten Gehäusen ist eine derartige Verschraubung nicht vorgesehen, sondern die Durchführungsöffnung für die durchzuführende Leitung ist dann in die Trennebene eingeformt und zwar derart, daß eine die Leitung umschließende, in die Ausnehmung eingesetzte Abdichtung von den Gehäuseteilen gleichförmig zusammengedrückt wird und hierdurch die gewünschte Abdichtung sichergestellt ist.

Diese Art der Abdichtung stellt zwar eine Vereinfachung gegenüber der erwähnten PG-Verschraubung dar, doch führt sie dennoch zu einem zusätzlichen Montageaufwand, da jeweils ein Ende der betreffenden Leitung freigelegt werden muß, um das Überstreifen der Abdichtung zu ermöglichen. Außerdem ist hiermit eine wasserdichte Abdichtung nicht gewährleistet.

Ausgehend von diesem Stand der Technik ist es Aufgabe der Erfindung eine wasserdichte Abdichtung der eingangs genannten Art zu schaffen, welche einfach gestaltet ist und eine vereinfachte Montage gestattet.

Diese Aufgabe wird erfindungsgemäß durch die kennzeichnenden Merkmale des Patentanspruchs 1 gelöst. Weitere vorteilhafte Ausgestaltungen und Verbesserungen der Erfindung sind Gegenstand der Unteransprüche.

Erfindungsgemäß ist daher an der Ausnehmung an dem Gehäuse eine stutzenähnliche Anformung vorgesehen, auf welche eine Schraubkappe aufschraubbar ist, sowie eine ringförmige längsgeteilte Abdichtung, wobei die beiden Teile der Abdichtung gemeinsam die Leitung umschließen und von der auf die stutzenähnliche Anformung aufgeschraubten Schraubkappe zusammengepreßt sich abdichtend gegen die durchgeführte, abzudichtende Leitung anlegen.

Entsprechend einer vorteilhaften Ausgestaltung der Erfindung kann vorgesehen sein, daß die ringförmige Abdichtung symmetrisch geteilt ist und daß die Trennebene des Gehäuses und der Abdichtung übereinstimmen.

Gemäß einer bevorzugten Ausführungsform der Erfindung ist die Anformung an den Gehäuseteilen jeweils als eine einstückig angeformte, halbzylindrische Anformung mit Außengewinde vorgesehen, die gemeinsam miteinander einen Hohlzylinder bilden.

Entsprechend einer vorteilhaften Ausgestaltung der Erfindung sind die längsgeteilten Teile der ringförmigen Abdichtung an ihrer Trennebene mit formschlüssig ineinandergreifendenAnformungen versehen, welche die Teile zueinander zentrieren und lösbar fixieren.

Dabei kann es vorteilhaft sein, daß die Breite der aneinanderliegenden Trennflächen der halbzylindrischen Teile der ringförmigen Abdichtung wenigstens deren halben axialen Länge entspricht.

Eine weitere Ausgestaltung der erfindungsgemäßen Abdichtung kann dadurch gekennzeichnet sein, daß die längsgeteilten Teile der ringförmigen Abdichtung an ihrer Innenseite jeweils eine mit der abzudichtenden Leitung zusammenarbeitende Dichtfläche aufweisen, deren axiale Länge wenigstens dem Durchmesser der zur Abdichtung vorgesehenen größtmöglichen Leitung entspricht.

Entsprechend einer vorteilhaften Ausführungsform der Erfindung kann vorgesehen sein, daß das Gehäuse mitsamt den angeformten Stutzenhälften sowie mit dem darin angeordneten Dichtelement einstückig, und zwar im sogenannten 2K-(Zweikomponenten)-Verfahren aus spritzfähigem Kunststoff gefertigt wird. Hierbei sind das Gehäuse sowie der angeformte Stutzen aus einem schlagzähen Material vorgesehen, während die erwähnte, der abzudichtenden Leitung zugewandte Dichtfläche des Dichtelements von einem flexiblen, elastisch nachgiebigen Material gebildet ist, welches im gleichen Verfahrensgang wie das Gehäuse an die Stutzen angespritzt wird.

Eine weitere Verbesserung der Dichtwirkung der erfindungsgemäßen Abdichtung kann dadurch erreicht werden, daß das Dichtelement an seinem Umfang gleichmäßig verteilt angeordnete radiale Einformungen aufweist, die sich jeweils über die axiale Länge des Dichtelements erstrecken.

Mit Hilfe dieser Einformungen kann erreicht werden, daß beim axialen Zusammengehen der Abdichtung beziehungsweise für deren verdrängtes Volumen ausreichender Raum zur Verfügung steht, der dann von dem ausweichenden Volumen gefüllt wird, so daß Verwerfungen und Falten, die zu Undichtigkeiten führen können, sicher vermieden werden.

Entsprechend einer bevorzugten Weiterbildung können die Einformungen derart ausgebildet sein, daß die Flanken der radialen Einformungen abwechselnd einen Öffnungswinkel α oder β begrenzen. Dabei wird durch die Öffnungswinkel der maximale Durchmesserausgleich bestimmt, das heißt, je größer der Winkel desto größer ist die mögliche Durchmesserdifferenz. Im folgenden werden die den Winkel α begrenzenden Einformungen als erste Einformungen bezeichnet und die den Winkel β begrenzenden Einformungen als zweite Einformungen.

Außerdem greift in jede zweite radiale Einformung ein Axialsteg ein, welcher die Flanken der ersten Einformungen radial verlängert. Der Winkel α zwischen 10° und 20°, vorzugsweise 15° betragen, während der Winkel β größer ist und zwischen 15° und 30°, vorzugsweise 18° beträgt. Dementsprechend ergibt sich für die ersten und zweiten Einformungen ein bevorzugtes Teilungsmaß von 16.

Entsprechend dieser Ausführungsform können die den Winkel α begrenzenden ersten Einformungen zum Durchmesserausgleich dienen, während die zweiten Einformungen mit dem Öffnungswinkel β hingegen jeweils einen Axialsteg aufnehmen, der die radiale Flankentiefe der ersten Einformungen erhöht. Gleichzeitig wirken diese Axialstege partiell tangential auf die Verformung des Dichtelements ein, das heißt quasi konzentrisch.

Dabei ermöglichen die Einformungen zwischen den Axialstegen dem überschüssigen Volumen der Dichtmuffe das Ausweichen, so daß die seither bei herkömmlichen Verschraubungen auftretenden Verwerfungen und Falten sicher vermieden werden. Vorteilhafterweise sind hierbei die Axialstege jeweils fest mit der zentralen Dichtmuffe verbunden sind. Dies kann zum Beispiel dadurch erreicht werden, daß die Axialstege in die entsprechende Einformungen der Dichtmuffe jeweils eingeklebt sind.

Gemäß einer bevorzugten Weiterbildung der Erfindung ist das Dichtelement aus zwei Komponenten gebildet dergestalt, daß die Axialstege eine größere Shorehärte aufweisen als die Dichtmuffe und diese zumindest partiell tangential beaufschlagen. Mit anderen Worten, die innenliegende Dichtmuffe besteht aus einem vergleichsweise hochelastischen Material, während die Axialstege aufgrund ihrer größeren Härte steifer sind und hierdurch in Verbindung mit der das Dichtelement konzentrisch beaufschlagenden Schraubkappe der Verschraubung die Dichtmuffe gleichförmig radial nach innen beaufschlagt.

Gemäß einer bevorzugten Ausgestaltung der Erfindung jedoch ist die erfindungsgemäße Abdichtung im sogenannten 2K-Spritzverfahren aus zwei-Komponenten gefertigt. Dies gewährleistet einerseits eine sichere Einhaltung der geometrischen und werkstoffbezogenen Parameter, und andererseits ist hiermit eine kostengünstige Massenfertigung möglich.

In Weiterbildung der Erfindung beträgt die radiale Tiefe der Einformungen höchstens 80% der Wanddicke der Dichtmuffe. Dabei kann entsprechend einer Ausführungsform vorgesehen sein, daß die radiale Tiefe der ersten Einformungen höchstens 50% und die der zweiten Einformungen höchstens 70% der Wanddicke der Dichtmuffe beträgt.

Gemäß einer weiteren bevorzugten Gestaltung entspricht die radiale Breite der Flanken der Axialstege der radialen Tiefe der ersten Einformungen. Dies hat sich als günstig erwiesen, um bei bestmöglicher Abdichtung eine möglichst große Durchmesserdifferenz abzudecken.

In diesem Zusammenhang steht auch entsprechend einer Weiterbildung der Erfindung, daß die Breite jedes Axialsteges am äußeren Umfang größer ist als die lichte Weite der ersten Einformungen.

Um die Dichtwirkung bei sonst unveränderter Gestaltung zu verbessern, kann es gemäß einer weiteren vorteilhaften Ausgestaltung zweckmäßig sein, daß die der Schraubkappe zugewandte Stirnseite der Dichtmuffe angefast ist. Hierdurch wird nicht nur die Handhabung der erfindungsgemäßen Abdichtung verbessert, sondern auch durch den zusätzlich geschaffenen Freiraum der Anfasung ein zusätzliches Volumen für das ausweichende Material der Dichtmuffe, welches sich hierbei nahe an die abzudichtende Leitung anlegt.

Diese und weitere vorteilhafte Ausgestaltungen und Weiterbildungen der Erfindung sind in den Unteransprüchen gekennzeichnet.

Anhand eines in der schematischen Zeichnung dargestellten Ausführungsbeispiels sollen die Erfindung, vorteilhafte Ausgestaltungen und Verbesserungen sowie besondere Vorteile der Erfindung näher erläutert und beschrieben werden.

Es zeigen:
- Fig. 1: eine erfindungsgemäße Abdichtung im Querschnitt entlang Schnittlinie III-III gemäß Fig. 3;
- Fig. 2: die Abdichtung gemäß Fig. 1 in Draufsicht mit im Abstand befindlichen Trennflächen;
- Fig. 3: die erfindungsgemäße Abdichtung im Längsschnitt entlang Schnittlinie II-II gemäß Fig. 2;
- Fig. 4: eine erfindungsgemäße Schraubkappe im Querschnitt entlang Schnittlinie VI-VI in Fig. 6;
- Fig. 5: die geteilte Schraubkappe mit nebeneinander befindlichen Kappenhälften gemäß Fig. 1 in Draufsicht und
- Fig. 6: einen Längsschnitt durch die Mutter gemäß Fig. 4 entlang Schnittlinie V-V in Fig. 5.

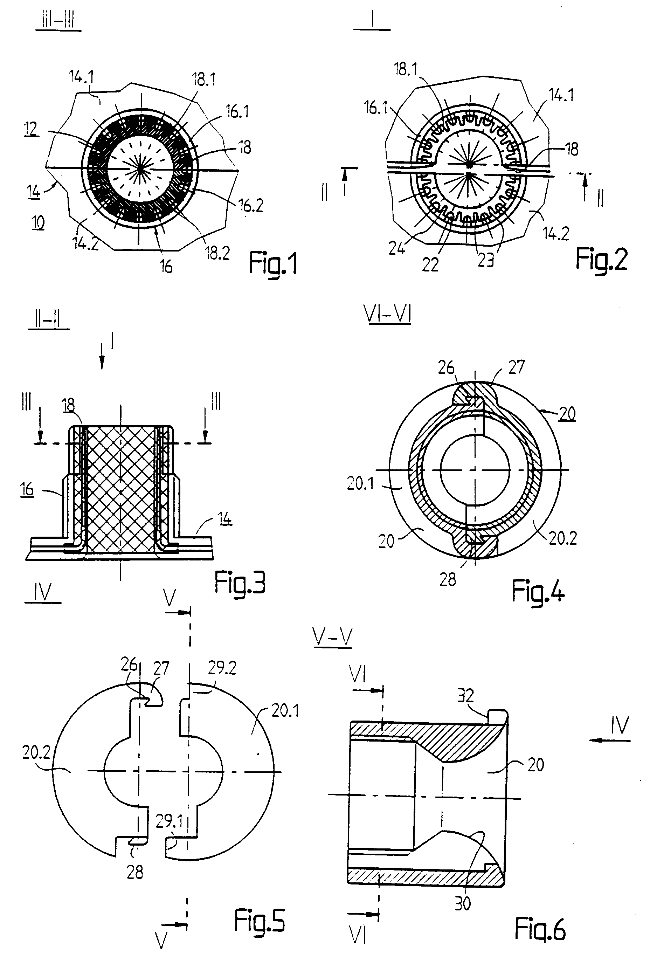

In Fig. 1 ist eine erfindungsgemäße Abdichtung 10 einer Leitungsdurchführung 12 an einem Gehäuse 14 mit einem Grundteil 16 und einem hierin eingesetzten Dichtelement 18 im Querschnitt entlang der in Fig. 3 angegebenen Schnittlinie III-III gezeigt.

Diese Abdichtung 10 ist in gleicher Weise ausgebildet wie eine sogenannte PG-Abdichtung und vorgesehen für wasserdicht abgedichtete Leitungsdurchführungen, insbesondere bei elektrischen Geräten. Dabei ist das Grundteil 16 von zwei jeweils an zwei Gehäuseteilen 14.1, 14.2 angeformten halbzylindrischen Gewindestutzen 16.1 und 16.2 gebildet. Das Dichtelement 18 ist längsgeteilt in zwei etwa halbzylindrische Formstücke 18.1, 18.2, die zu einer zylindrischen Hülse aneinander gefügt sind und von dem Grundteil 16 und von einer hier nicht, sondern in Fig. 4 bis 6 gezeigten anschraubbaren Schraubkappe 20 zusammengehalten sind.

Das Grundteil der Abdichtung 10 besteht dementsprechend aus einem hohlzylindrischen Gewindestutzen 16 mit Außengewinde für die Schraubkappe 20, der das komplett zusammengefügte Dichtelement 18 aufnimmt und auf welchen die Schraubkappe 20 aufgeschraubt wird.

Entsprechend der Erfindung ist das Grundteil 16, das heißt seine halbzylindrischen Stutzenhälften 16.1, 16.2, einstückig mit dem Gehäuse 14, das heißt mit den zugeordneten Gehäuseteilen 14.1, 14.2, verbunden, so daß zusätzliche Abdichtmaßnahmen nicht erforderlich sind. Die Schraubkappe 20 besitzt eine durchgehende Ausnehmung, durch welche eine abzudichtende, hier nicht dargestellte Leitung hindurchgeführt ist.

Entsprechend einer in dem in den Fig. 1 bis 3 gezeigten Ausführungsbeispiel wiedergegebenen Ausgestaltung der Erfindung weist das Dichtelement außen angeordnete erste und zweite Einformungen 22, 23 mit unterschiedlicher radialer Tiefe auf, die dazu dienen, für das beim Zusammenpressen des Dichtelements 18 zwecks Abdichtung der Leitung verdrängte Volumen an Dichtmaterial Raum zu schaffen und so eine zu Undichtigkeiten führende Faltenbildung des Dichtelements 18 zu verhindern. Zwischen den ersten und zweiten Einformungen 22, 23 am äußeren Umfang des Dichtelements sind Axialstege 24 angeordnet.

Der Öffnungswinkel der ersten Einformungen 22 beträgt 10° ≤ α ≤ 20°, vorzugsweise α ≈ 8°, während der Öfnungswinkel der zweiten Einformungen 23 größer ist und 15° ≤ β ≤ 30° beträgt, vorzugsweise β ≈ 15°.

An den zweiten Einformungen 23 beträgt die minimale Restwanddicke des Dichtelements 20 ca. 40% der vollen Wanddicke des Dichtelements 20, während an den ersten Einformungen 22 eine Restwanddicke von etwa 60% verbleibt.

Die Wirkungsweise der erfindungsgemäßen Abdichtung 10 beruht darauf, daß durch die zuvor beschriebene Gestaltung der Axialstege 24 diese partiell tangential auf die Verformung des Dichtelements 20 einwirken. Infolge der erfindungsgemäß vorgesehenen nicht ausgefüllten ersten Einformungen 28 ist planmäßig ausreichend Raum zur Verfügung, in welche beim Zusammendrücken des Dichtelements 20 durch die auf das Grundteil 16 geschraubte Schraubkappe 20 das sonst Verwerfungen und Falten bildende überschüssige Materialvolumen des Dichtelements 20 ausweichen kann.

Hierdurch ist auch bei einer größeren Durchmesserdifferenz zwischen der zentralen Ausnehmung in dem Dichtelement 20 einerseits und dem Durchmesser der abzudichtenden Leitung andererseits eine faltenfreie Abdichtung gewährleistet. Dabei wird die maximale Durchmesserdifferenz über den Winkel α eingestellt, nämlich dann, wenn die den Öffnungswinkel begrenzenden Flanken der ersten Einformungen 22 soweit zusammen gedrückt werden, daß sie auf Block gehen, das heißt einander berühren beziehungsweise aneinander anliegen. Zusätzlich kann eine Anfasung vorgesehen sein, welche zusätzlichen Freiraum bietet.

Auf die Größe der durch die Axialstege 24 ausgeübten wirksamen tangentialen Kräfte kann durch Veränderung des Winkels β Einfluß genommen werden. Ferner ist das Verformungsverhalten und damit das Zugentlastungsverhalten der erfindungsgemäßen Abdichtung 10 von der jeweils vorhandenen Restwanddicke an den ersten Einformungen 22 abhängig wie auch von der Shorehärte des Dichtelements 20.

Die Fertigung des Dichtelements 18 erfolgt vorteilhafterweise mittels der Zweikomponenten-Kunststoffspritztechnik, so daß ein Minimum von zu handhabenden Teilen resultiert. Dabei ist das Material für die Innenseite des Dichtelements 18 hochflexibel und anschmiegsam, während die mit den Einformungen 22, 23 versehene Außenseite des Dichtelements 18 aus steiferem Material gebildet ist.

In Fig. 4 ist eine erfindungsgemäße Schraubkappe 20 im Querschnitt entsprechend Schnittlinie VI-VI in Fig. 6 dargestellt, die längsgeteilt ist und zwei zueinander kompatible, formschlüssig miteinander lösbar verbundene Kappenteile 20.1, 20.2 aufweist. Erst durch diese erfindungsgemäße Gestaltung der Schraubkappe 20 gewinnt die vorstehend beschriebene Längsteilung des Dichtelements 18 an Bedeutung für die Montage der erfindungsgemäßen Abdichtung 10.

Die formschlüssige Verbindung der Kappenteile 20.1 und 20.2 ist gemäß der beispielhaft gezeigten Ausgestaltung der Erfindung mittels Nut- und Feder-Verbindung vorgesehen, wobei die Kappenteile 20.1 und 20.2 wahlweise je mit zwei in angeformte Seitenstege eingeformten Nuten und mit zwei angeformten Federn ausgebildet sein können oder, wie im Beispiel gemäß Fig. 4 bis 6 gezeigt, symmetrisch zur Längsachse der Schraubkappe 20 ausgebildet sind. Hierbei ist jede Kappenhälfte 20.1, 20.2 mit einem eine Nut 26 aufweisenden angeformten Steg 27 und mit einer angeformten Feder 28 versehen, die jeweils mit dem kompatiblen Gegenstück des anderen Kappenteils 20.1 und 20.2 zusammenarbeiten. Um ein axiales Auseinandergehen der Kappenteile 20.1 und 20.2 sicher zu verhindern, ist die angeformte Nut-Feder-Verbindung jeweils mit einem axialen Anschlag 29.1, 29.2 sowie mit einer nicht näher dargestellten kraftschlüssig wirksamen Verrastung versehen.

Um die abzudichtende Leitung vor mechanischen Schäden, insbesondere vor unzulässigen Knickungen, zu bewahren, ist der Endbereich der Schraubkappe 20 an der Innenseite mit einem Radius geformt, der ausgehend von einer Verengung 30 in einen wulstförmigen Rand 33 übergeht. Die Verengung 30 legt sich bei der Montage an das eingesetzte Dichtelement 18 und preßt dieses gleichermaßen in axialer wie auch in radialer Richtung zusammen, so daß es sich an die abzudichtende, hindurchgeführte Leitung faltenfrei anlegt.

Die erfindungsgemäße Abdichtung 10 zeichnet sich also dadurch aus, daß sämtliche Teile der Abdichtung 10, wie Schraubstutzen 16, Dichtelement 18 und Schraubkappe 20 längsgeteilt sind und damit auf einfache Weise das Einlegen der durchzuführenden und abzudichtenden Leitung ermöglicht.

## Patentansprüche

1. Abdichtung für eine Leitungsdurchführung in einem eine Teilungsebene aufweisenden geteilten Gehäuse, zum Beispiel mit einem Gehäuseunterteil und mit einem Gehäuseoberteil, mit einer in der Teilungsebene des Gehäuses angeordneten Ausnehmung, welche ein eingefügtes ringförmige Dichtelement aufweist, durch welches eine Leitung durchgeführt ist, die von dem ringförmigen Dichtelement konzentrisch umfaßt ist, welches Dichtelement von den miteinander Gehäuseteilen elastisch verformt ist und sich abdichtend an die Leitung anlegt, dadurch gekennzeichnet, daß an der Ausnehmung an dem Gehäuse eine stutzenähnliche Anformung vorgesehen ist, auf welche eine Schraubkappe aufschraubbar ist und die von jeweils einstückig angeformten Halbzylindern mit Außengewinde gebildet ist, die miteinander gemeinsam einen Hohlzylinder bilden, daß die ringförmige Abdichtung längsgeteilt ist und daß die beiden Teile der Abdichtung gemeinsam die Leitung umschließen und von der auf die stutzenähnliche Anformung aufgeschraubten Schraubkappe zusammengepreßt sich abdichtend gegen die Leitung anlegen.

2. Abdichtung nach Anspruch 1, dadurch gekennzeichnet, daß die Schraubkappe längsgeteilt ist und daß die Kappenteile formschlüssig miteinander lösbar verbunden sind.

3. Abdichtung nach einem der Ansprüche 1 oder 2, dadurch gekennzeichnet, daß die ringförmige Abdichtung symmetrisch geteilt ist und daß die Trennebene des Gehäuses und der Abdichtung übereinstimmen.

4. Abdichtung nach einem der vorherigen Ansprüche, dadurch gekennzeichnet, daß die längsgeteilten Teile der ringförmigen Abdichtung an ihrer Trennebene mit ineinandergreifendenAnformungen versehen sind, welche die Teile zueinander zentrieren und halten.

5. Abdichtung nach einem der vorherigen Ansprüche, dadurch gekennzeichnet, daß die Breite jeder aneinanderliegenden Trennfläche der halbzylindrischen Teile der ringförmigen Abdichtung wenigstens ihrer halben axialen Länge entspricht.

6. Abdichtung nach einem der vorherigen Ansprüche, dadurch gekennzeichnet, daß die längsgeteilten Teile der ringförmigen Abdichtung an ihrer Innenseite jeweils eine mit der abzudichtenden Leitung zusammenarbeitende Dichtfläche aufweisen, deren axiale Länge wenigstens dem Durchmesser der zur Abdichtung vorgesehenen größtmöglichen Leitung entspricht.

7. Abdichtung nach Anspruch 6, dadurch gekennzeichnet, daß die Dichtfläche der ringförmigen Abdichtung jeweils mit ringförmig angeformten Stegen versehen ist, welche Dichtringe bilden.

8. Abdichtung nach einem der vorherigen Ansprüche, dadurch gekennzeichnet, daß die längsgeteilten Teile der ringförmigen Abdichtung jeweils an ihrer äußeren Umfangsfläche gleichmäßig verteilt angeordnete radiale Einformungen aufweisen, die sich jeweils über die axiale Länge des Dichtelements erstrecken.

9. Abdichtung nach Anspruch 6, dadurch gekennzeichnet, daß die Flanken der radialen Einformungen abwechselnd einen Öffnungswinkel α oder β begrenzen.

10. Abdichtung nach einem der Ansprüche 8 oder 9, dadurch gekennzeichnet, daß die längsgeteilten Teile der ringförmigen Abdichtung gleichmäßig am äußeren Umfang verteilt angeordnete erste und zweite radiale Einformungen aufweist, daß die ersten Einformungen den Öffnungswinkel α aufweisen, daß die zweiten radialen Einformungen jeweils zwischen zwei ersten Einformungen angeordnet sind und den Öffnungswinkel β aufweisen und daß in jede zweite radiale Einformung jeweils ein Axialsteg eingreift, welcher die Flanken der ersten Einformungen radial verlängert.

11. Abdichtung nach einem der vorherigen Ansprüche, dadurch gekennzeichnet, daß jedes längsgeteilte Teil der ringförmigen Abdichtung ein aus zwei Komponenten gebildetes Dichtelement ist dergestalt, daß die Axialstege eine größere Shorehärte aufweisen als die Dichtmuffe und diese zumindest partiell tangential beaufschlagen.

12. Abdichtung nach Anspruch 11, dadurch gekennzeichnet, daß die Axialstege jeweils fest mit der zentralen Dichtmuffe verbunden sind.

13. Abdichtung nach einem der vorherigen Ansprüche, dadurch gekennzeichnet, daß die radiale Tiefe der Einformungen höchstens 80% der Wanddicke der Dichtmuffe beträgt.

14. Abdichtung nach einem der vorherigen Ansprüche, dadurch gekennzeichnet, daß die radiale Tiefe der Einformungen höchstens 80% der Wanddicke der Dichtmuffe beträgt.

15. Abdichtung nach Anspruch 14, dadurch gekennzeichnet, daß die radiale Tiefe der ersten Einformungen höchstens 50% und der zweiten Einformungen höchstens 70% der Wanddicke der Dichtmuffe beträgt.

16. Abdichtung nach einem der vorherigen Ansprüche, dadurch gekennzeichnet, daß die radiale Breite der Flanken der Axialstege der radialen Tiefe der ersten Einformungen entspricht.

17. Abdichtung nach einem der vorherigen Ansprüche, dadurch gekennzeichnet, daß die Breite jedes Axialsteges am äußeren Umfang größer ist als die lichte Weite der ersten Einformungen.

18. Abdichtung nach einem der vorherigen Ansprüche, dadurch gekennzeichnet, daß die der Schraubkappe zugewandte Stirnseite der Dichtmuffe mit einer Anfasung versehen ist.

19. Abdichtung nach einem der vorherigen Ansprüche, dadurch gekennzeichnet, daß am Grundteil ein Bund angeformt ist, an welchem eine Dichtlippe angebracht ist.
